# EUROPÄISCHE PATENTSCHRIFT

(11) **EP 0 928 759 B1**
(45) Veröffentlichungstag und Bekanntmachung des Hinweises auf die Patenterteilung: **02.05.2001**
(21) Anmeldenummer: 98123132.7
(22) Anmeldetag: 04.12.1998
(51) Int. Cl.: B65G 47/57, B65G 47/88, B65G 13/00

(54) **Palettenbelade- und/ -entladestation**
Station for loading and unloading pallets
Poste pour le changement et le déchargement des palettes

(30) Priorität: 07.01.1998 DE 19800264
(43) Veröffentlichungstag der Anmeldung: 14.07.1999
(73) Patentinhaber: WTT Fördertechnik GmbH, 42929 Wermelskirchen (DE)
(72) Erfinder: Rolf, Wilhelm, 42929 Wermelskirchen (DE)
(74) Vertreter: Niemann, Uwe, Dr.-Ing.

(56) Entgegenhaltungen:
- FR-A- 2 475 472
- US-A- 4 037 738
- US-A- 4 214 848

## Beschreibung

Die Erfindung betrifft eine Palettenbelade- und/ -entladestation mit einem Hubtisch, der zwei zueinander parallele Hubbalken aufweist.

Paletten besitzen in der Regel zwei äußere und einen mittleren Palettenfuß, die auch aus in Reihe angeordneten und durch eine Fußleiste verbundenen Blöcken bestehen können. Zum Transport der Paletten werden die Gabeln eines Hubstaplers oder eines handbetriebenen Hubwagens in die Zwischenräume zwischen den Palettenfüßen eingefahren und dann angehoben.

Zum Beladen oder Entladen von Paletten werden Hubtische verwendet, auf denen die Palette abgesetzt wird. Der Kommissionierer, der die Palette be- oder entlädt, kann den Hubtisch mit der darauf abgesetzten Palette auf eine für ihn günstige Arbeitshöhe einstellen.

Bekannt sind Hubtische, die eine durchgehende Plattform für das Absetzen der Palette und eine so geringe Bauhöhe besitzen, daß bei eingefahrenem Hubtisch die Plattform sich nur etwa 80 mm über der Grundfläche befindet. Damit eine mit einem handbetriebenen Hubwagen transportierte Palette auf der Plattform abgesetzt werden kann, befinden sich vor und/oder hinter dem Hubtisch sogenannte Auffahrkeile, über die der Hubwagen bis auf die Plattform fahren kann.

Ein anderer Hubtisch besitzt zwei im Abstand der äußeren Palettenfüße angeordnete Hubbalken, die über einen Verbindungssteg zu einem U-förmigen Bauteil vereinigt sind, so daß ein handbetriebener Hubwagen mit einer darauf befindlichen Palette in den vom U gebildeten Zwischenraum einfahren und die Palette auf den Hubbalken absetzen oder sie von diesem aufnehmen kann.

Bei all diesen Ausführungen ist der Transport der Paletten vom und zum Hubtisch umständlich und arbeitsaufwendig, denn der Hubwagen oder auch ein Gabelstapler müssen stets exakt an den Hubtisch herangefahren werden.

Hinzu kommt, daß der Palettentransport häufig vom Kommissionierer selbst durchgeführt werden muß.

Aufgabe der Erfindung ist es, den Transport von Paletten zur Station oder von der Station weg zu vereinfachen.

Diese Aufgabe wird dadurch gelöst, daß die Breite jedes Hubbalkens kleiner ist als der Abstand zwischen zwei benachbarten Palettenfüßen, daß der gegenseitige Abstand der Hubbalken größer ist als die Breite eines zwischen sie eingreifenden Palettenfußes und daß auf jeder Seite des Hubtisches, in einer Vertikalprojektion gesehen, neben den Hubbalken eine Rollenbahn angeordnet ist, die länger ist als der Hubtisch, wobei der gegenseitige Abstand der Rollenbahnen dem Abstand der äußeren Palettenfüße entspricht. Damit können beladene oder unbeladene Paletten auf den Rollenbahnen an den Hubtisch herangeführt und bis über den Hubtisch bewegt werden, so daß sie mit dem Hubtisch angehoben werden können. Nach Beendigung der Be- oder Entladearbeit wird der Hubtisch soweit abgesenkt, bis die Palettenfüße wieder auf den Rollenbahnen aufliegen, auf denen sie von dem Hubtisch wegbewegt werden können. Es versteht sich, daß die Dicke der Hubbalken kleiner sein sollte als die Höhe der Palettenfüße.

Im folgenden werden in der Zeichnung dargestellte Ausführungsbeispiele der Erfindung erläutert; es zeigen:
- Figur 1: schematisch eine Draufsicht auf eine Palettenbelade- und/ -entladestation,
- Figur 2: schematisch und teilweise eine Seitenansicht eines Hubtisches,
- Figur 3: schematisch einen Vertikalschnitt durch den Gegenstand nach Figur 1,

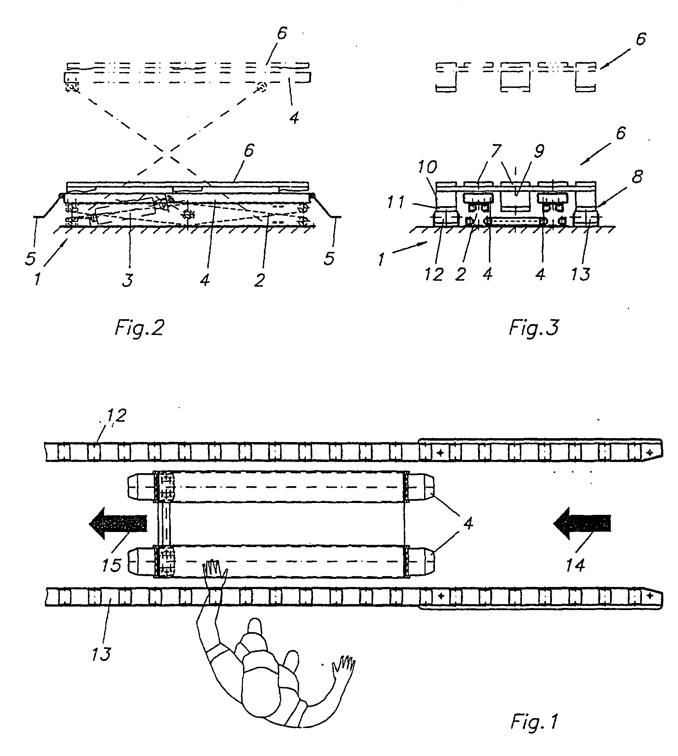

In Figur 2 ist ein Hubtisch 1 mit einem Scherengestänge 2, einem Hubzylinder 3 zur Betätigung des Scherengestänges 2 und zwei mittels des Scherengestänges 2 heb- und senkbaren, zueinander parallelen Hub-balken 4 dargestellt. An den Enden der Hubbalken 4 sind Sicherheitsklappen 5 schwenkbar angelenkt.

Die Hubbalken 4 nehmen eine Palette 6 auf, unter deren Palettenboden 7 zwei äußere Palettenfüße 8 und eine mittlerer Palettenfuß 9 angeordnet sind. Jeder Palettenfuß 8 bzw. 9 besteht aus in Reihe angeordneten Blöcken 10, die unterseitig über eine Fußleiste 11 verbunden sind. Die Figuren 2 und 3 zeigen mit ausgezogenen Linien den Hubtisch 1 bei eingefahrenen Hubbalken 4 mit Palette 6 sowie mit strichpunktierten Linien die ausgefahrenen Hubbalken 4 mit Palette 6.

Die Breite jedes Hubbalkens 4 ist kleiner als der Abstand zwischen zwei benachbarten Palettenfüßen 8, 9. Der gegenseitige Abstand der Hubbalken 4 ist größer als die Breite des zwischen sie eingreifenden mittleren Palettenfußes 9. Die Dicke der Hubbalken 4 ist kleiner als die Höhe der Palettenfüße 8 bzw. 9.

Auf jeder Seite des Hubtisches 1 ist, in einer Vertikalprojektion gesehen, neben den Hubbalken 4 eine Rollenbahn 12 bzw. 13 angeordnet, die länger ist als der Hubtisch 1, wobei der gegenseitige Abstand der Rollenbahnen 12 bzw. 13 dem Abstand der äußeren Palettenfüße 8 entspricht. Dementsprechend können beladene Paletten in Richtung des Pfeils 14 auf den Rollenbahnen 12, 13 an den Hubtisch 1 und bis über den Hubtisch 1 bewegt werden. Durch Betätigen des Hubzylinders 3 wird die Palette 6 zum Entladen von den Hubbalken 4 bis auf die gewünschte Höhe angehoben. Die entladene Palette 6 wird wieder abgesenkt, bis ihre Palettenfüße 8 auf den Rollenbahnen 12 bzw. 13 aufliegen, so daß sie in Richtung des Pfeils 15, also in gleicher Richtung vom Hubtisch 1 wegbewegt werden kann.

Die Rollenbahnen 12, 13 können zumindest bereichsweise antreibbare Rollen aufweisen. Nicht dargestellt ist, daß im Bereich des Hubtisches 1 und/oder der Rollenbahnen 12, 13 insbesondere gesteuert verstellbare Anschläge zur Steuerung des Betriebsablaufs vorgesehen sein können.

## Patentansprüche

1. Palettenbelade- und/ -entladestation mit einem Hubtisch, der zwei zueinander parallele Hubbalken aufweist, **dadurch gekennzeichnet** , daß die Breite jedes Hubbalkens (4) kleiner ist als der Abstand zwischen zwei benachbarten Palettenfüßen (8, 9), daß der gegenseitige Abstand der Hubbalken (4) größer ist als die Breite eines zwischen sie eingreifenden Palettenfußes (9) und daß auf jeder Seite des Hubtisches (1), in einer Vertikalprojektion gesehen, neben den Hubbalken (4) eine Rollenbahn (12, 13) angeordnet ist, die länger ist als der Hubtisch (1), wobei der gegenseitige Abstand der Rollenbahnen (12, 13) dem Abstand der äußeren Palettenfüße (8) entspricht.

2. Station nach Anspruch 1, **dadurch gekennzeichnet** , daß die Dicke der Hubbalken (4) kleiner ist als die Höhe der Palettenfüße (8, 9).

## Claims

1. Palette loading and unloading station with a lifting table, which comprises two mutually parallel lifting beams, characterised in that the width of each lifting beam (4) is less than the spacing between two adjacent palette feet (8, 9), that the mutual spacing of the lifting beams (4) is greater than the width of a palette foot (9) engaging therebetween and that a roller path (12, 13) which is longer than the lifting table (1) is arranged on each side of the lifting table (1), as seen in a vertical projection, and near the lifting beams (4), wherein the mutual spacing of the roller paths (12, 13) corresponds to the spacing of the outer palette feet (8).

2. Station according to claim 1, characterised in that the thickness of the lifting beams (4) is less than the height of the palette feet (8, 9).

## Revendications

1. Poste de chargement et de déchargement de palettes, comportant une table de levage munie de deux traverses de levage mutuellement parallèles, caractérisé par le fait que la largeur de chaque traverse de levage (4) est plus petite que la distance entre deux pieds voisins (8, 9) de la palette ; par le fait que la distance mutuelle séparant les traverses de levage (4) est plus grande que la largeur d'un pied (9) de la palette, s'engageant entre lesdites traverses ; et par le fait qu'une piste (12, 13) à rouleaux disposée de chaque côté de la table de levage (1), en jouxtant les traverses de levage (4) observée en projection verticale, est plus longue que ladite table de levage (1), la distance mutuelle entre les pistes (12, 13) à rouleaux correspondant alors à la distance entre les pieds extérieurs (8) de la palette.

2. Poste selon la revendication 1, caractérisé par le fait que l'épaisseur des traverses de levage (4) est plus petite que la hauteur des pieds (8, 9) de la palette.
